# EUROPEAN PATENT APPLICATION

(11) **EP 2 557 474 A1**
(43) Date of publication of application: **13.02.2013**
(21) Application number: 11193742.1
(22) Date of filing: 15.12.2011
(51) Int. Cl.: G06F 1/16

(54) **Portable electronic device with connection kit for device peripherals**

(30) Priority: 12.08.2011 TW 100128895
(71) Applicant: Acer Incorporated, Hsichih, New Taipei City (TW)
(72) Inventor: Peng, Hsueh-Chih, New Taipei City (TW)
(74) Representative: Becker, Eberhard

(57) **Abstract**

A connection kit (1, 3) includes at least one interface connector (11, 31) for electronically engaging and communicating with at least one device peripheral. A portable electronic device (2) includes a chamber (201) extended therein and defines a bottom side (202) and a lateral side (203). The chamber (201) forms a first open end on the bottom side (202) and a second open end on the lateral side (203) respectively. The lateral side (203) determines a contour of the portable electronic device. The connecting kit (1, 3) is electrically and pivotally engaged with the portable electronic device and pivotal between a use position that is extended outside the chamber (201) and the contour of the portable electronic device and in which the at least one device peripheral is adapted to be engaged and communicating therewith, and a stowed position that is accommodated in and not extended outside the chamber (201).

## Description

### Background of the Invention

### 1. Field of the Invention

The present invention relates to an electronic device with a connection kit for device peripherals and, particularly to, a connection kit operable between a use position that is extended from the electronic device and a stowed position that is received in the electronic device.

### 2. Description of the Related Art

TW Patent No. 309179 shows a docking station for a laptop. The docking station includes an interface connector for electrically communicating with the laptop. The interface connector is operable between a use position that is exposed and a stowed position that is concealed. When the laptop is electrically engaged with the docking station, the interface connector is in the use position and the laptop is stacked with the docking station. The problem is that the docking station is stacked below the laptop and inhibits the laptop from dissipating heat. Another problem is that the docking station has got some heft and is cumbersome and inconvenient to take along all the times.

The present invention is, therefore, intended to obviate or at least alleviate the problems encountered in the prior art.

### Summary of the Invention

According to the present invention, a connection kit includes at least one interface connector for electronically engaging and communicating with at least one device peripheral. A portable electronic device includes a chamber extended therein and defines a bottom side and a lateral side. The chamber forms a first open end on the bottom side and a second open end on the lateral side respectively. The lateral side determines a contour of the portable electronic device. The connecting kit is electrically and pivotally engaged with the portable electronic device and pivotal between a use position that is extended outside the chamber and the contour of the portable electronic device and in which the at least one device peripheral is adapted to be engaged and communicating therewith, and a stowed position that is accommodated in and not extended outside the chamber.

It is an objective of the present invention to provide a portable electronic device with a connection kit for device peripherals operable between a use position that is extended from the electronic device and would not inhibit the electronic device from dissipating heat, and a stowed position that is not extended outside a shape of the electronic device.

It is another objective of the present invention to provide a portable electronic device with a connection kit for device peripherals

It is a further objective of the present invention to provide a portable electronic device with a convenient and easy portable connection kit for device peripherals.

Other objects, advantages, and new features of the present invention will become apparent from the following detailed description of the invention when considered in conjunction with the accompanied drawings.

### Brief Description of the Drawings

Fig. 1 is a perspective view of a portable electronic device with a connection kit for device peripherals in accordance with a first embodiment of the present invention, with the connection kit in a stowed position.
Fig. 2 is another perspective view of the portable electronic device with the connection kit of Fig. 1, with the connection kit in a use position.
Fig. 3 is an exploded perspective view of the portable electronic device with the connection kit of Fig. 1.
Fig. 4 is an exploded perspective view of the portable electronic device with the connection kit, taken from a different angle of view of Fig. 3.
Fig. 5 illustrates the operation of the connection kit moved from the stowed position to the use position.
Fig. 6 is a partial cross-sectional view of Fig. 1.
Fig. 7 is a partial cross-sectional view showing the connection kit in a position between the use and stowed positions.
Fig. 8 is a partial cross-section view of Fig. 2.
Fig. 9 is an extended view of Fig. 2, showing the connection kit adapted to electrically engaging and communicating with a plurality of device peripherals.
Fig. 10 is a perspective view of a portable electronic device with a connection kit for device peripherals in accordance with a second embodiment of the present invention, with the connection kit in a use position.
Fig. 11 is another perspective view of the portable electronic device with the connection kit of Fig. 10, with the connection kit in a stowed position.
Fig. 12 is a perspective view of a portable electronic device with a connection kit for device peripherals in accordance with a third embodiment of the present invention, with the connection kit in a use position.

### Detailed Description of the Preferred Embodiments

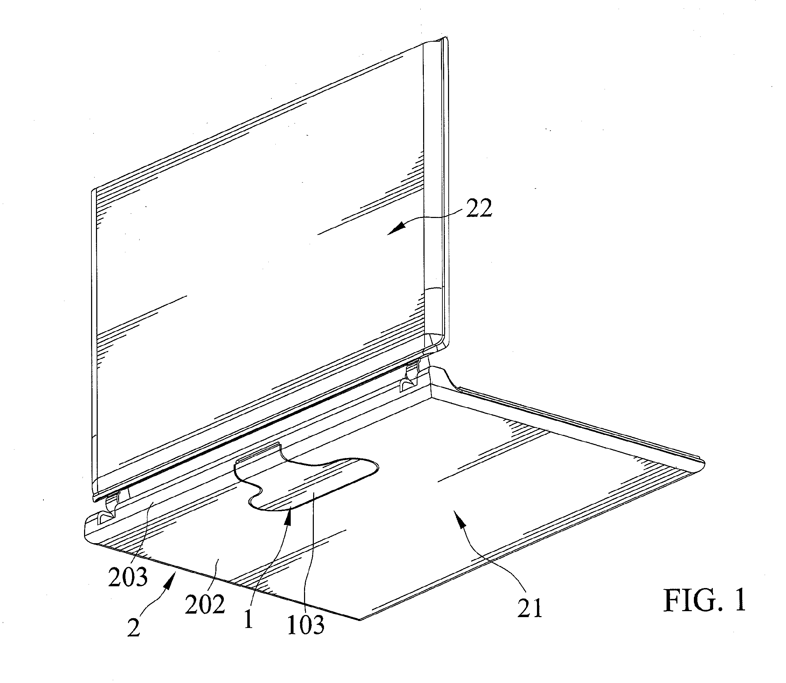

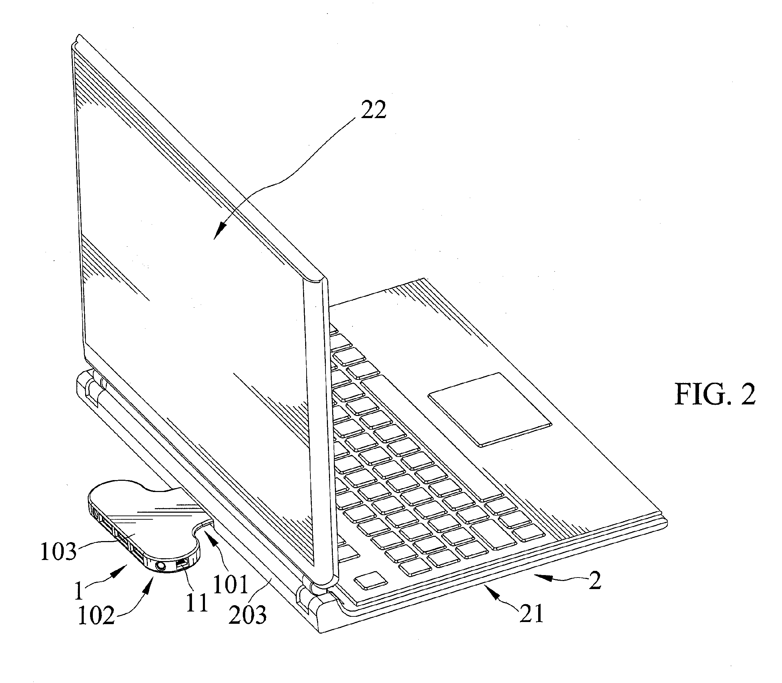

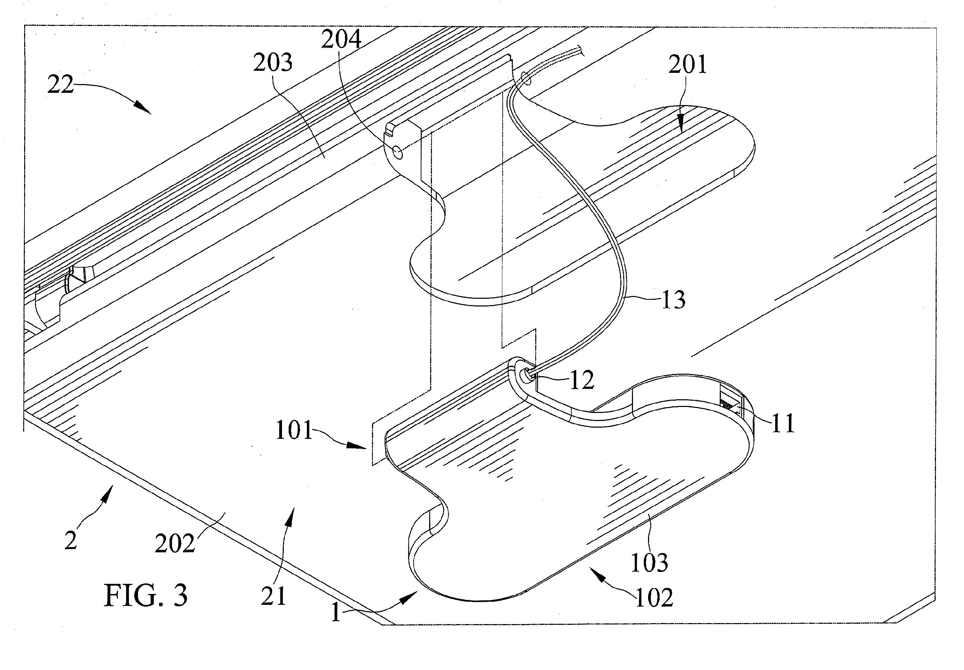

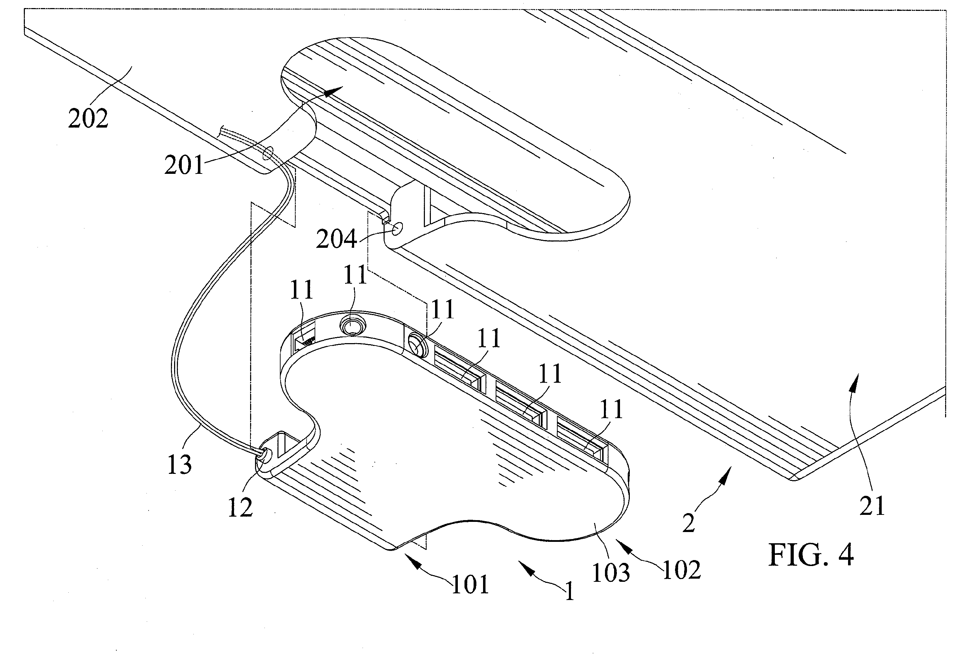

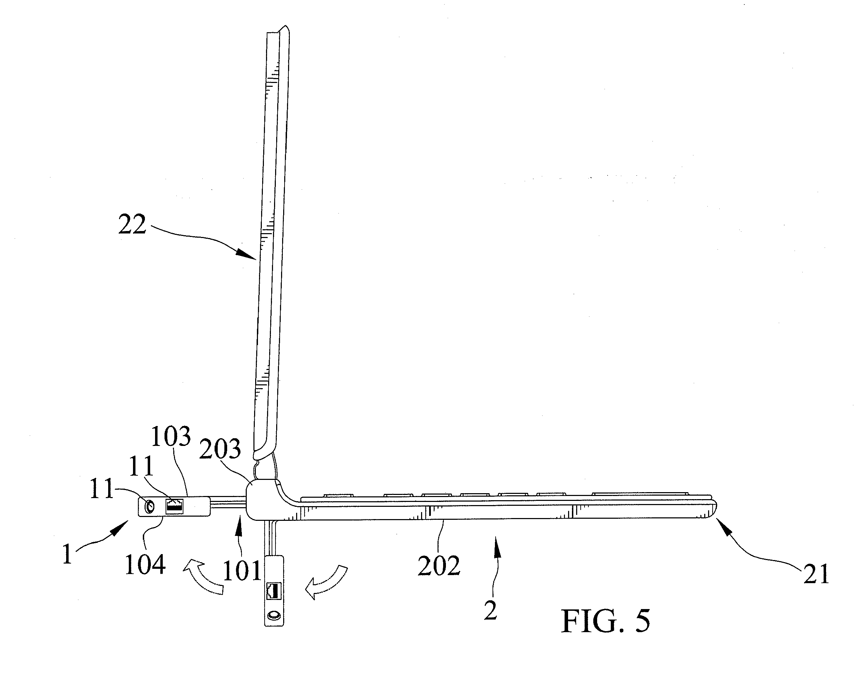

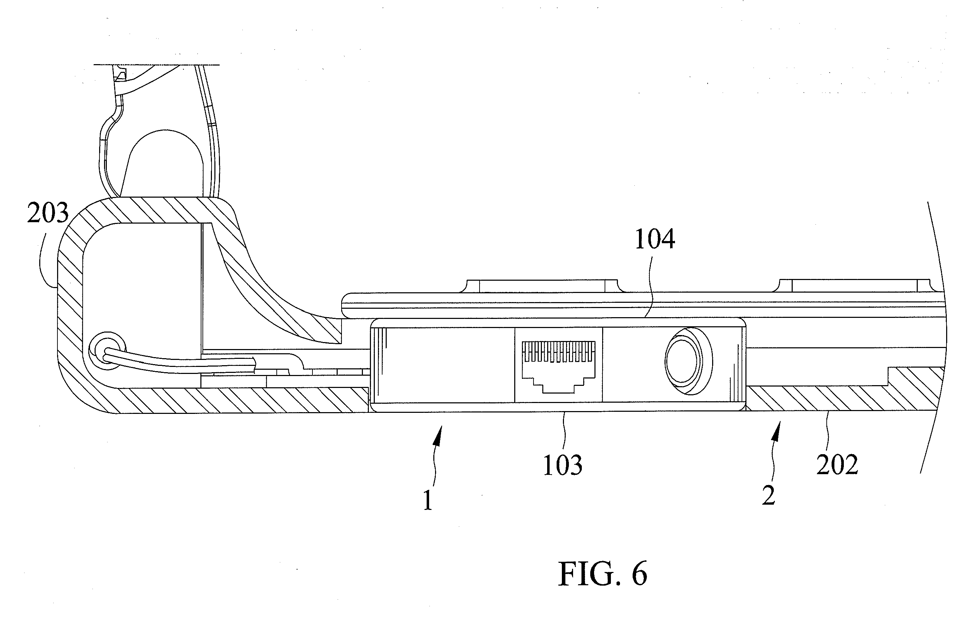

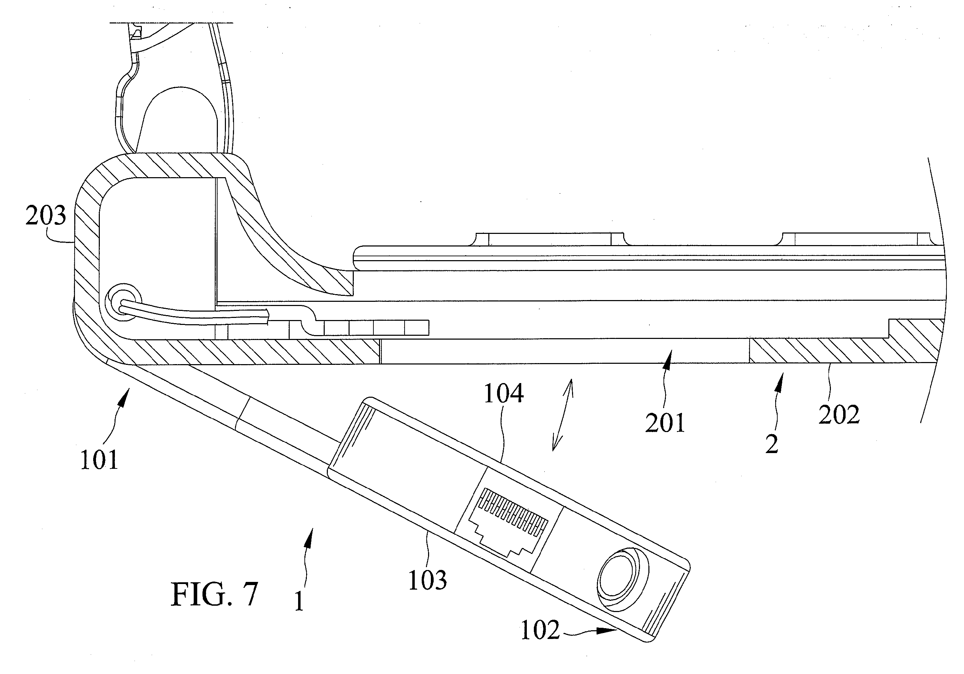

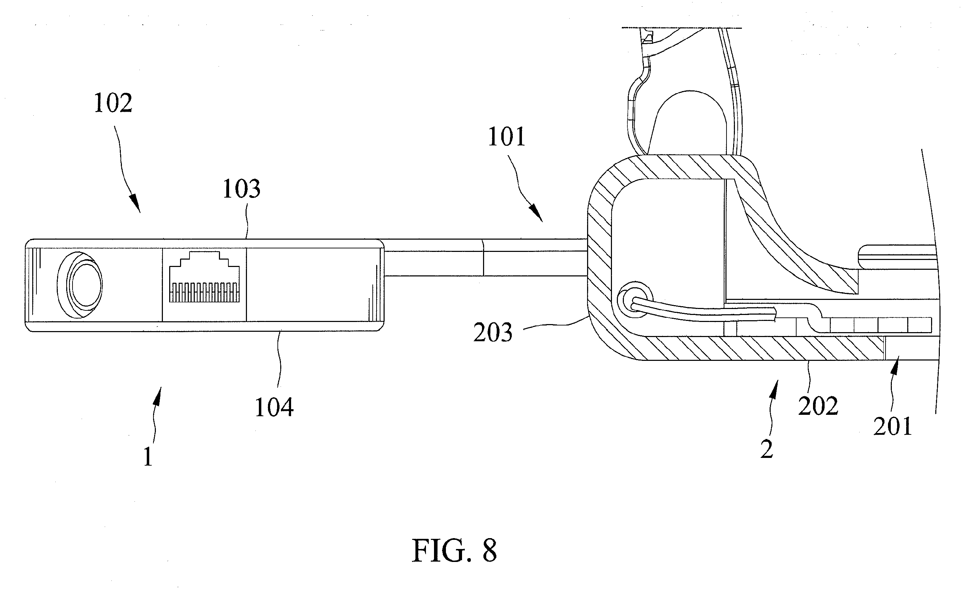

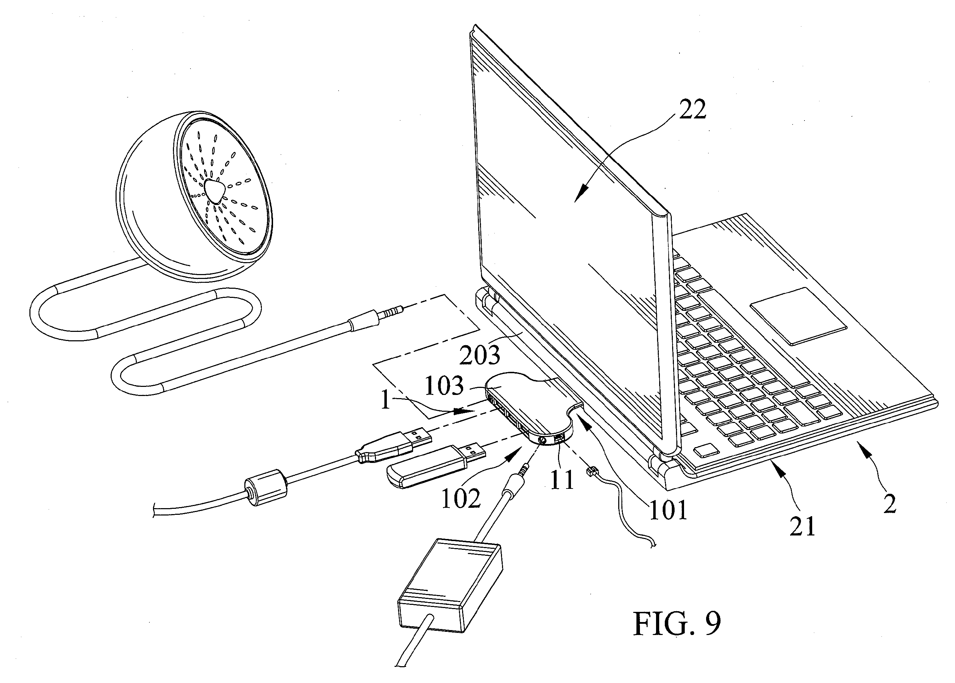

Figs. 1 through 9 show a portable electronic device with a connection kit for device peripherals including a connection kit 1 and a portable electronic device 2.

The connecting kit 1 includes a first end 101 and a second end 102. The connection kit 1 includes a plurality of interface connectors 11 for electronically engaging and communicating with a plurality of device peripherals. In the embodiment, the plurality of interface connectors 11 show a USB type, an audio cable type, and an Ethernet cable type. However, any types of interface connectors are within the scope of the invention.

The portable electronic device 2 includes an input device 21 and a monitor 22. The input device 21 is pivotally engaged with the monitor 22. The monitor 22 is pivotal to a first position that is overlapped and parallel with the input device 21 and a second position that is inclined with respect to the input device 21. Moreover, the portable electronic device 2 includes a chamber 201 extended therein and defines a bottom side 202 and a lateral side 203. The chamber 201 forms a first open end on the bottom side 202 and a second open end on the lateral side 203 respectively. The lateral side 203 determines a contour of the portable electronic device 2. The portable electronic device 2 put on a supporting surface includes the bottom side 202 abutted against the supporting surface.

Furthermore, the chamber 201 defines a first depth to the bottom side 202 and the connection kit 1 defines a second depth respectively. The connection kit 1 defines a top edge 103, a bottom edge 104 and includes the second depth determining a distance between the top and bottom edges 103 and 104. The second depth is smaller than the first depth. The connection kit 1 also defines a lateral edge, which extends from the top edge 103 to the bottom edge 104 and determines the second depth. The plurality of interface connectors 11 are disposed on the lateral edge of the connection kit 1.

The connecting kit 1 is electrically and pivotally engaged with the portable electronic device 2. A wire 13 has a first distal end electrically connected to the connection kit 1 and a second distal end electrically connected to the portable electronic device 2. The connection kit 1 defines at least one first connecting section 12 at the first end 101 and the chamber 201 defines at least one second connecting section 204 respectively. The at least one first connecting section 12 and the at least one second connecting section 204 are pivotally engaged with each other to allow the connection kit 1 to pivotally engage with the portable electronic device 2. The at least one first connecting section 12 forms a projection. The at least one second connecting section 204 is in the shape of a hole.

The connecting kit 1 is pivotal between a use position that is extended outside the chamber 201 and the contour of the portable electronic device 2 and in which the plurality of device peripherals are adapted to be engaged and communicating therewith, and a stowed position that is accommodated in and not extended outside the chamber 201.

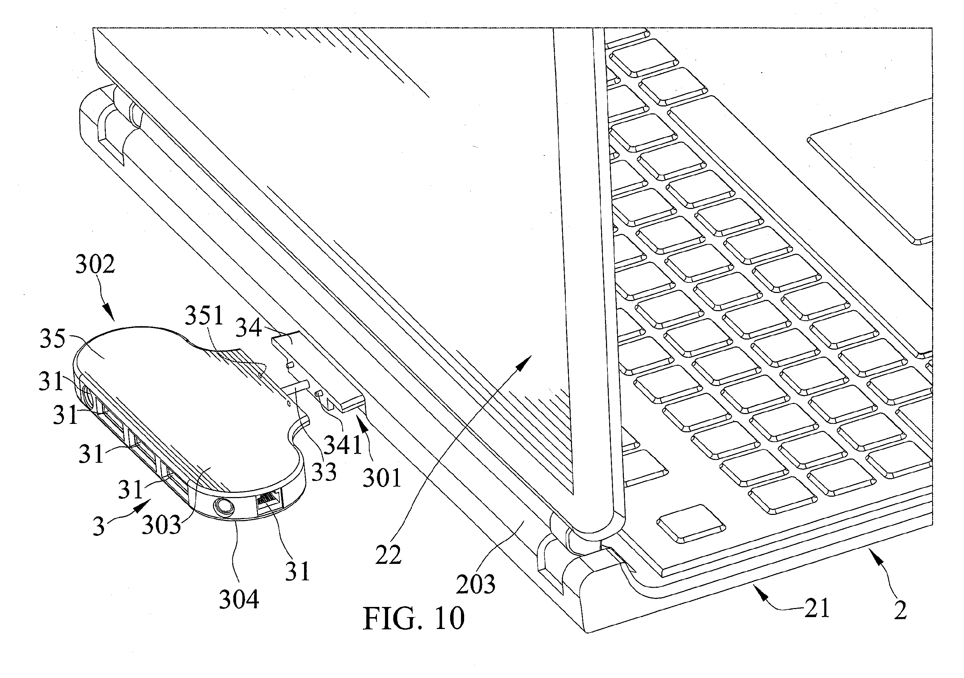

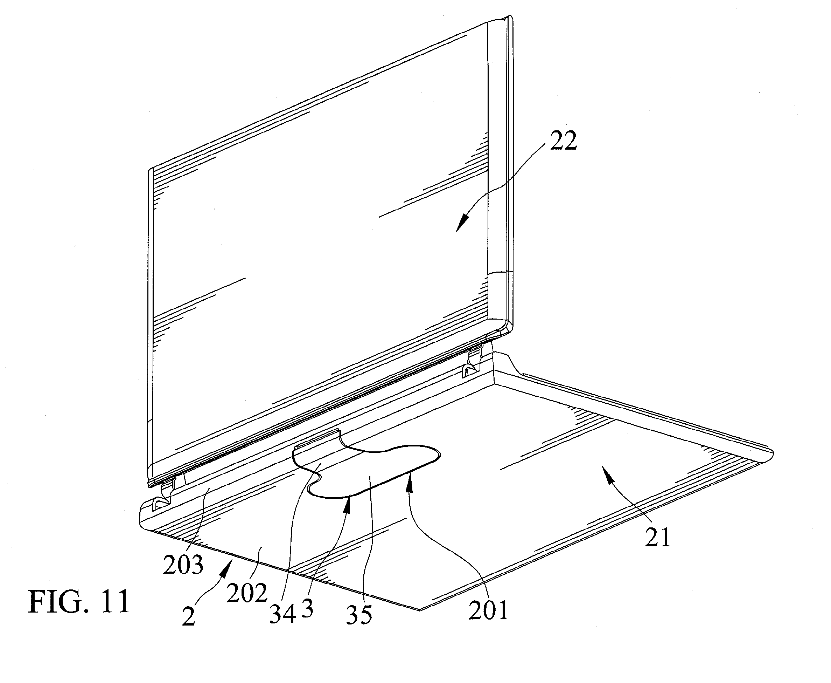

Figs. 10 and 11 show a portable electronic device with a connection kit for device peripherals in accordance with a second embodiment of the present invention. A connection kit 3 is used in lieu of the connection kit 1. The connection kit 3 includes first and second ends 301 and 302. Likewise, the connection kit 3 defines a third depth and also defines a top edge 303 and a bottom edge 304 and includes the third depth determining a distance between the top and bottom edges 303 and 304. The third depth is smaller than the first depth. Also, the connection kit 3 includes first and second bodies 34 and 35. The first and second bodies 34 and 35 are releasably joined together. The first body 34 is defined on the first end 301 and the second body 35 is defined on the second end 302 of the connection kit 3 respectively. The connection kit 3 is pivotally engaged with the portable the electronic device 2 by the first body 34. Further, at least one interface connector 31 is disposed in the second body 35. The first body 34 defines a first joining end 341 and the second body 35 defines a second joining end 351 respectively. The first and second bodies 34 and 35 joined together includes the first joining end 341 engaged with the second joining end 351 and the first and second bodies 34 and 35 detached includes the first joining end 351 disengaged from the second joining end 352 respectively. The first and second bodies 34 and 35 include a cable 33 extended therebetween and being stretched when the second body 35 is detached from the first body 34. Moreover, the first and second bodies 34 and 35 are interconnected electrically by the cable 33. The cable 33 has an arcuate cross section.

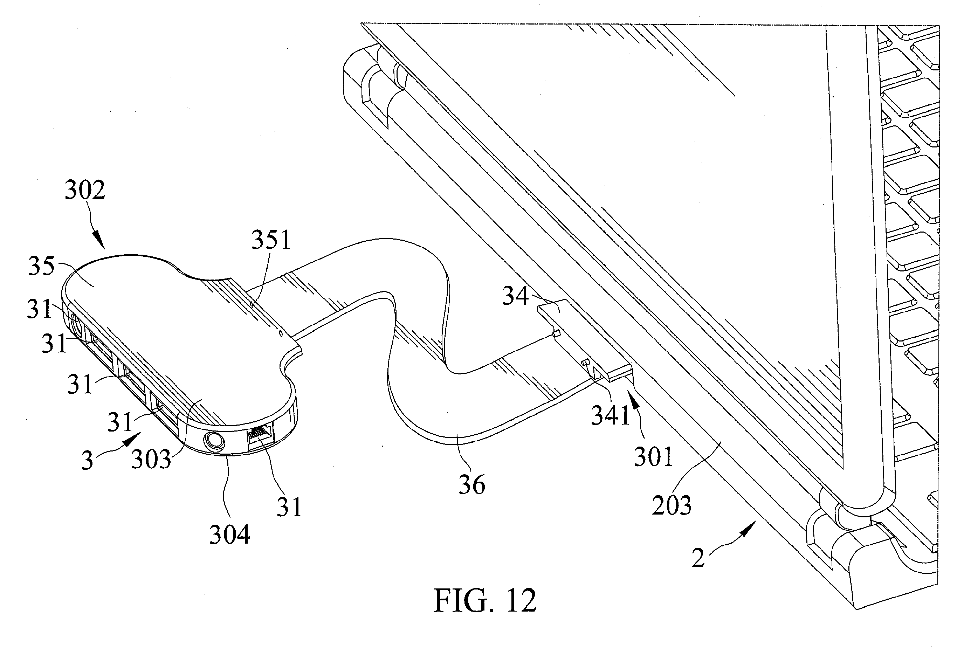

Fig. 12 shows a portable electronic device with a connection kit for device peripherals in accordance with a third embodiment of the present invention. A cable 36 is used in lieu of the cable 33. The cable 36 is a flexible flat cable that consists of a flat and flexible plastic film base and one surface including multiple metallic conductors bonded thereto.

In view of the forgoing, each of the connection kits 1 and 3 for device peripherals are operable to the use position that is extended from the electronic device 2 engaged therewith and would not inhibit the electronic devices 2 from dissipating heat. Consequently, when the electronic device 2 is put on a supporting surface and the connection kit 1 or 3 is in the use position, the chamber 201 provides a space, thus allowing the electronic device 2 to dissipate heat easily and effectively. Moreover, each of the connection kits 1 and 3 is operable to the stowed position that is not extended outside a shape of the electronic device. So, the connection kit 1 or 3 is convenient and easy portable.

While the specific embodiments have been illustrated and described, numerous modifications come to mind without significantly departing from the spirit of invention and the scope of invention is only limited by the scope of accompanying claims.

## Claims

1. A portable electronic device with a connection kit for device peripherals comprising:
a connection kit (1, 3) including at least one interface connector (11, 31) for electrically engaging and communicating with at least one device peripheral; and
a portable electronic device (2) including a chamber (201) extended therein, with the portable electronic device defining a bottom side (202) and a lateral side (203), with the chamber (201) forming a first open end on the bottom side (202) and a second open end on the lateral side (203) respectively, with the lateral side (203) determining a contour of the portable electronic device;
wherein the connecting kit (1, 3) is electrically and pivotally engaged with the portable electronic device and pivotal between a use position that is extended outside the chamber (201) and the contour of the portable electronic device and in which the at least one device peripheral is adapted to be engaged and communicating therewith, and a stowed position that is accommodated in and not extended outside the chamber (201).

2. The portable electronic device with the connection kit for device peripherals as claimed in claim 1, wherein the connection kit (3) includes first and second bodies (34, 35), with the first and second bodies (34, 35) releasably joined together, with the connection kit (3) pivotally engaged with the portable the electronic device (2) by the first body (34), with the at least one interface connector (31) disposed in the second body (35), with the first body (34) defining a first joining end (341) and the second body defining a second joining end (351) respectively, with the first and second bodies (34, 35) joined together including the first joining end (341) engaged with the second joining end (351) and the first and second bodies detached (34, 35) including the first joining end (341) disengaged from the second joining end (351) respectively, with the first and second bodies (34, 35)including a cable (33, 36) extended therebetween and being stretched when the second body (35) is detached from the first body (34), with the first and second bodies (34, 35) interconnected electrically by the cable (33, 36).

3. The portable electronic device with the connection kit for device peripherals as claimed in claim 1, wherein the at least one interface connector (11, 31) includes a USB interface type, or an audio cable type, or an Ethernet cable type.

4. The portable electronic device with the connection kit for device peripherals as claimed in claim1, wherein the at least one interface connector (11, 31) includes a plurality of interface connectors, wherein the connection kit (1,3) defines a top edge (103, 303), a bottom edge (104, 304) and includes a depth determining a distance between the top and bottom edges (303, 304), wherein the connection kit (1, 3) defines a lateral edge, which is extended from the top edge (103, 303) to the bottom edge (104, 304) and determines the depth, wherein the plurality of interface connectors (11, 31) are disposed on the lateral edge of the connection kit (1, 3).

5. The portable electronic device with the connection kit for device peripherals as claimed in claim 4, wherein the plurality of interface connectors (11, 31) include a USB interface type, or an audio cable type, or an Ethernet cable type, or a collection thereof.

6. The portable electronic device with the connection kit for device peripherals as claimed in claim 1, wherein the connection kit (1) defines at least one first connecting section (12) and the chamber (201) defines at least one second connecting section (204) respectively, with the at least one first connecting section (12) and the at least one second connecting section (204) pivotally engaged with each other to allow the connection kit (1) to pivotally engage with the portable electronic device (2).

7. The portable electronic device with the connection kit for device peripherals as claimed in claim 6, wherein one of the at least one first and second connecting sections (12, 204) forms a projection, with the other of the at least one first and second connecting sections (12, 204) in the shape of a hole.

8. The portable electronic device with the connection kit for device peripherals as claimed in claim 1, wherein the portable electronic device (2) includes an input device (21) and a monitor (22), with the input device pivotally engaged with the monitor (22), with the monitor (22) pivotal to a first position that is overlapped and parallel with the input device (21) and a second position that is inclined with respect to the input device (21).

9. The portable electronic device with the connection kit for device peripherals as claimed in claim 2, wherein the portable electronic device (2) includes an input device (21) and a monitor (22), with the input device pivotally engaged with the monitor (22), with the monitor (22) pivotal to a first position that is overlapped and parallel with the input device (21) and a second position that is inclined with respect to the input device (21).

10. The portable electronic device with the connection kit for device peripherals as claimed in claim 4, wherein the portable electronic device (2) includes an input device (21) and a monitor (22), with the input device pivotally engaged with the monitor (22), with the monitor (22) pivotal to a first position that is overlapped and parallel with the input device (21) and a second position that is inclined with respect to the input device (21).
